# EUROPEAN PATENT SPECIFICATION

(11) **EP 1 639 826 B1**
(45) Date of publication and mention of the grant of the patent: **26.11.2008**
(21) Application number: 04736871.7
(22) Date of filing: 15.06.2004
(51) Int. Cl.: H04N 7/26, H04N 7/088, G06T 1/00

(54) **RAISING DETECTABILITY OF ADDITIONAL DATA IN A MEDIA SIGNAL HAVING FEW FREQUENCY COMPONENTS**
ERHÖHUNG DER DETEKTIERUNGSWAHRSCHEINLICHKEIT VON ZUSÄTZLICHEN DATEN IN EINEM MEDIASIGNAL MIT WENIGEN FREQUENZKOMPONENTEN
AUGMENTATION DE LA DETECTABILITE DE DONNEES SUPPLEMENTAIRES DANS UN SIGNAL MEDIA COMPRENANT PEU DE COMPOSANTES DE FREQUENCE

(30) Priority: 19.06.2003 EP 03101792
(43) Date of publication of application: 29.03.2006
(73) Proprietor: Koninklijke Philips Electronics N.V., 5621 BA Eindhoven (NL)
(72) Inventor: VAN DER VEEN, Minne, NL-5656 AA Eindhoven (NL); LEMMA, Aweke, N., NL-5656 AA Eindhoven (NL); APREA, Javier, F., NL-5656 AA Eindhoven (NL); BRUEKERS, Alphons, A., M., L., NL-5656 AA Eindhoven (NL)
(74) Representative: Schmitz, Herman Jan Renier
(86) International application number: PCT/IB2004/050906
(87) International publication number: WO 2004/112399

(56) References cited:
- WO-A-02/15587
- WO-A-99/17537
- AWEKE NEGASH LEMMA ET AL: "A TEMPORAL DOMAIN AUDIO WATERMARKING TECHNIQUE" IEEE TRANSACTIONS ON SIGNAL PROCESSING, IEEE, INC. NEW YORK, US, vol. 51, no. 4, April 2003 (2003-04), pages 1088-1097, XP001171829 ISSN: 1053-587X cited in the application
- JIAN ZHAO KOCH E: "A generic digital watermarking model" COMPUTERS AND GRAPHICS, PERGAMON PRESS LTD. OXFORD, GB, vol. 22, no. 4, 1 August 1998 (1998-08-01), pages 397-403, XP004145482 ISSN: 0097-8493
- COX I J ET AL: "SECURE SPREAD SPECTRUM WATERMARKING FOR MULTIMEDIA" IEEE TRANSACTIONS ON IMAGE PROCESSING, IEEE INC. NEW YORK, US, vol. 6, no. 12, 1 December 1997 (1997-12-01), pages 1673-1687, XP000199950 ISSN: 1057-7149

## Description

### TECHNICAL FIELD

The present invention generally relates to the field of providing additional data in a media signal and more particularly to methods, devices, a signal and an information storage medium related to embedding of additional data in a media signal.

### DESCRIPTION OF RELATED ART

With the evolution of the Internet it is possible to access or retrieve a virtually limitless amount of informational content. Content can then be provided by different content providers in the form of media signals of varying shapes and forms. Media signals can for instance be provided as audio signals, in either compressed or uncompressed form, image signals in compressed or uncompressed form as well as video signals in compressed or uncompressed form. In order to inhibit that media content is unlawfully obtained by persons not entitled to it or that illegal copies of content are being made, there is a need for content owners to protect their content. In order to do this they often need to provide additional information in the media signals. Additional information can also be provided for other reasons, like for instance for providing text in relation to a piece of audio (e.g., lyrics).

One field of use where additional data is provided in media signals is in the field of Digital Rights Management (DRM), where additional data in the form of watermarks are used to indicate the origin of media content and possibly of user in order to inhibit unlawful tampering of the media content.

The possibility of correct and effective watermark detection depends heavily on the method used for embedding the data into the host signal and on properties of this signal. One frequently used type of watermark embedding is the so-called multiplicative watermarking, where the media signal to be watermarked is multiplied with the watermark in question. On the other hand, normally a media signal has a lot of different frequency components, whereas sometimes it can have few such components. When the components are few it can be hard to detect a watermark that has been embedded using multiplicative watermarking.

International patent application WO-A-02/15587 describes how additional data, like a watermark, is added to a media signal. The signal is here described in relation to a sine wave. A binary code is added to the signal in a high frequency band through either adding noise or not adding noise in this high frequency band. Upon detection, the sequence of digits (i.e., zeroes and ones) obtained represents (a coded version of) the watermark information. The document thus describes a technique for additive watermarking, which is not applicable in a multiplicative watermarking environment. Besides, since the additional information is only provided in a high frequency band, which can easily be filtered away using a simple low-pass filter, it is fragile and therefore not suitable when robustness is an important condition.

From "A generic digital watermarking model" by JIAN ZHAO KOCH E, COMPUTERS AND GRAPHICS, PERGAMON PRESS LTD. OXFORD, GB, vol. 22, no. 4, 1 August 1998 (1998-08-01), pages 397-403 it is known to provide a watermarking technique to data containing noise.

In a more robust, multiplicative watermarking scheme, a plurality of circular shifted chip sequences of real numbers is multiplied with a properly scaled version of the media signal and added back to the original media signal. Upon detection, the distances between the diverse correlation peaks carry (a coded version of) the watermark information. If the host signal contains few frequency components, the correlation will be weak. There is thus a need for enabling a higher level of detectability for additional data that has to be embedded in a media signal with few frequency components using a multiplicative embedding technique.

### SUMMARY OF THE INVENTION

It is thus an object of the present invention to provide multiplicative embedding of additional data in a media signal that is more robust (i.e., has a higher level of detectability of the additional data), especially in sections of the media signal that have few frequency components. The invention is set out in the appended claims.

The advantage of shaping the noise signal based on said model is to make sure that the added noise is not perceptible.

In one embodiment, also the modified media signal is shaped that is combined with said additional data with a signal shaping function based on a model of human perception. This has the advantage of making sure that both the added noise and the embedded watermark are not perceptible.

In one embodiment, the added noise is scaled, the embodiment further relates to adding the media signal to the modified media signal that is combined with said additional data and adding the unscaled noise signal to the media signal that is combined with the additional data. This has the advantage of providing a more predictable control mechanism for the embedding of additional data.

In one embodiment, the media signal is analyzed and the embodiment further relates to combining the additional data with sections of the media signal or the media signal mixed with noise in dependence of the analysis.

The present invention has the advantage of providing better detectability of additional data when it is embedded in a media signal having few frequency components, e.g. highly tonal signals like excerpts of pitch-pipe or harpsichord. With the invention it is for instance possible to embed a more easily detectable watermark in a modified media signal compared with an ordinary media signal having these properties. Because of this higher level of detectability the additional data remains detectable even if the quality of the media signal is degraded, i.e. the probability of a correct detection has increased. It is then easier to perform for instance forensic tracking of a processed media signal.

The general idea behind the invention is thus to mix a media signal with a noise signal and combine the additional data with the media signal that has been modified in this way.

These and other aspects of the invention will be apparent from and elucidated with reference to the embodiments described hereinafter.

### BRIEF DESCRIPTION OF THE DRAWINGS

The present invention will now be explained in more detail in relation to the enclosed drawings, where
Fig 1 shows a block schematic of a device for embedding a watermark in a modified media signal according to a first embodiment of the invention,
Fig. 2 shows a block schematic of a first variation of a combiner unit that can be used in the device in fig. 1.
Fig. 3 shows a block schematic of a second variation of a combiner unit that can be used in the device in fig. 1,
Fig. 4 shows a block schematic of a device for embedding a watermark in a modified media signal according to a second embodiment of the invention,
Fig. 5 shows a block schematic of a device for embedding a watermark in a modified media signal according to a third embodiment of the invention,
Fig. 6 shows a flow chart of a method of embedding a watermark in a modified media signal according to the third embodiment of the invention,
Fig. 7 shows a block schematic of a device for embedding a watermark in a modified media signal according to a fourth embodiment of the invention,
Fig. 8 shows a block schematic of a device for switching between embedding of a watermark in an original media signal or a modified media signal according to the invention, and
Fig. 9 shows an information storage medium in the form of CD disc having a media signal according to the invention stored on it.

### DETAILED DESCRIPTION OF EMBODIMENTS

The present invention relates to the field of providing additional data in media signals having a sparse frequency content in at least parts of the signal. In the field of audio such signals can include the sound from instruments like harpsichord and pitch pipe. The invention is however not limited to audio but can be applied on other media signals like for instance video or digital images. The additional data is preferably provided in the form of a watermark. It should however be realised that the invention is not limited to watermarks, but the additional data can be any additional data that needs to be detected in a media signal, like for instance additional text in relation to a song.

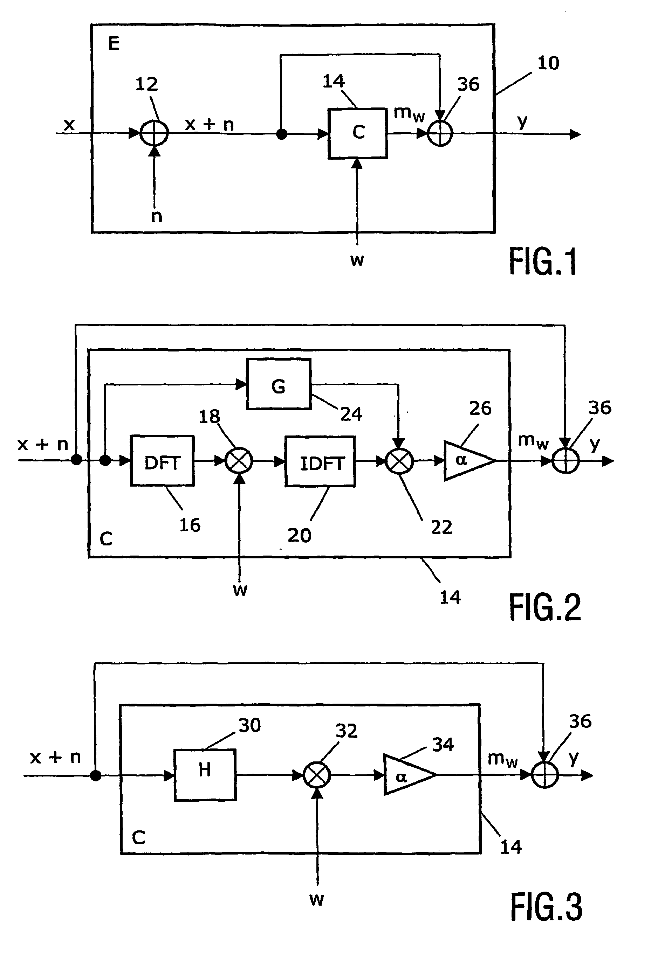

Fig. 1 shows a block schematic of a device 10 for embedding additional data in a media signal having sparse frequency content according to a first embodiment of the invention. For this reason the device 10 includes a first adding unit 12, which first adding unit 12 receives the media signal x and adds a noise signal n to this media signal in order to provide a modified media signal x + n. The media signal x is in these circumstances often referred to as the host signal. The modified host signal x + n is then supplied to a watermark combiner unit 14, which combines the additional data in the form of a watermark w in the modified host signal x + n to provide a first host modifying signal m_{w} at its output. Finally, in a second adding unit 36, the first host modifying signal m_{w} is added back to the modified host signal x+n (or the host signal x) to provide an output media signal y with said additional data. The combiner unit 14 shown here is a filter that applies the watermark w in the form of suitably selected filter coefficients. The combiner unit 14 is thus a multiplicative unit that modifies the modified host signal x + n through multiplying it with the watermark. Because the modified signal contains more frequency components than the original signal, the watermark is easier to detect. The noise signal n is here an additional watermark carrier, so that both the noise signal and the host signal carry the watermark.

However, also signals that have many different frequency components may benefit from this type of embedding, especially by insertion of noise shaping in the higher frequency range. This will not significantly improve robustness of the watermark, but for unprocessed watermarked audio it may yield significantly better detection reliabilities.

Fig. 2 shows a first variation of the combiner unit 14 according to the invention, which works in the frequency domain. The combiner unit therefore includes a discrete Fourier transform unit 16 which receives the modified host signal x + n and transforms it to the frequency domain. The transformed modified host signal is then provided to a multiplying unit 18, which multiplies the transformed modified host signal with a watermark w. The watermark w is here a frequency domain watermark. The watermarked transformed modified host signal is then provided to an inverse Fourier transform unit 20, which transforms the watermarked transformed modified host signal back into the time domain and supplies it to a multiplying unit 22. The multiplying unit 22 also receives the results from a graceful raising/decaying on/off switching function. In order to provide this switching the modified host signal x + n is therefore supplied to a unit 24, which uses a temporal gain function G. The output of the multiplying unit 22 is then provided to a scaling unit 26, which scales the multiplied signal with a scaling parameter α. This multiplied and scaled signal is then provided to the second adding unit 36, which also receives the modified host signal and adds these signals together to form the output signal y, which is the watermarked host signal. More details about embedding of watermarks according to this principle is described in the document "Robust, multi-functional and high-quality audio watermarking technology", by Michiel van der Veen, Fons Breukers, Jaap Haitsma, Ton Kalker, Aweke Negash Lemma and Wemer Oomen in The Proceedings of the 110-th AES Convention, Amsterdam, The Netherlands, May 2001, which is herein incorporated by reference.

The above described frequency domain combiner unit can be modified in many ways. It is for instance possible to remove the branch including the amplifying unit and also to remove the scaling unit, although this would degrade the signal quality.

Fig. 3 shows another variation of a combiner unit that works in the time domain. The combiner unit 14 includes a bandpass filter 30, which filters the modified host signal x + n and provides the filtered signal to a multiplying unit 32, which also receives a watermark w and multiplies the watermark w with the filtered modified host signal x + n. The output of the multiplying unit 32 is connected to a scaling unit 34, which scales the watermarked signal with a scaling parameter α and provides it to the second adding unit 36, which also receives the modified host signal x + n. The output of the second adding unit 36 is then the watermarked host signal y. The scaling unit 34 is also here not strictly necessary for providing a watermarked signal. The watermark w is here a time domain watermark. More detail about this watermarking technique can be found in the document, "A temporal domain audio watermarking technique", by Aweke Negash Lemma, Javier Aprea, Wemer Oomen and Leon van de Kerkhof, IEEE Transactions on Signal Processing, April 2003, Vol. 51, page 1088-1097, which is herein incorporated by reference.

The above described combiner units are just examples of multiplicative combiner units than can be used in the present invention. It should be realised that many other types of multiplicative combiner units can be used instead.

The thus described watermarking technique shown in fig. 1 can be improved in that a model of human perception can be used for shaping the noise signal for reducing the perceptible distortion. The model used depends on the type of signal. In case the media signal is an audio signal the model is a psychoacoustic model of the human hearing system and in case a pure image is used a psycho-visual model of the human visual system is used.

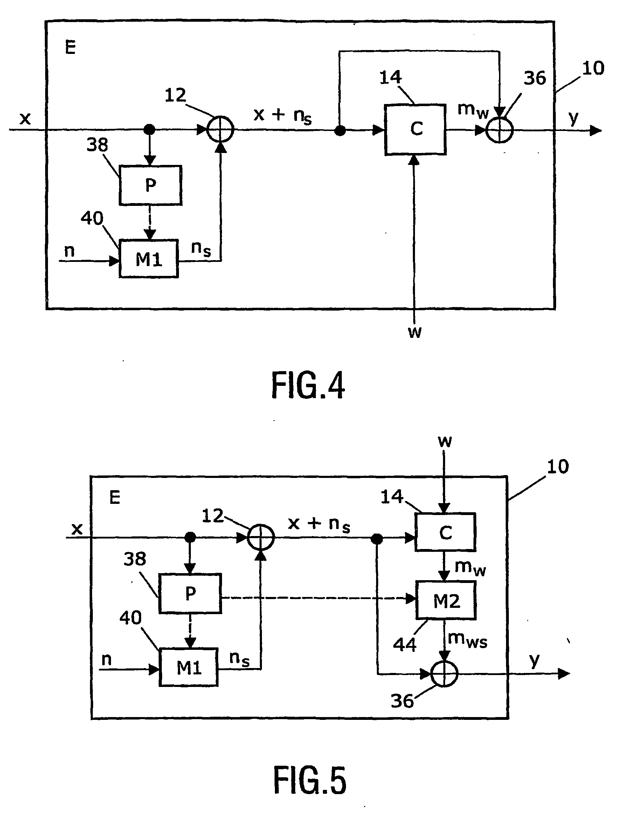

A block schematic of a device for performing embedding of a watermark into a media signal according to a second embodiment of the invention is shown in fig. 4. The device in fig. 4 basically includes the same components as the device in fig. 1. There is one difference though and that is that the device 10 further includes a first signal shaping unit 40 in the form of a masking filter and a filter control unit 38. The filter control unit 38 receives the host signal x, analyses this signal using a psycho-acoustic model of the human auditory system P. The unit 38 uses the results from the analysis for choosing filter coefficients of the filter 40. The filter 40, which receives the noise signal n, shapes the noise using a first signal shaping function M1 so that a shaped noise signal nₛ is obtained. This shaped noise signal nₛ is then provided to the first adding unit 12 for mixing with the host signal x. Thereafter embedding of a watermark is performed in the above described way in the watermark combiner unit 14. The filter 40 shapes the noise signal so that it is perceptibly masked by the host signal x. If the media signal were an image the model would be a psycho-visual model of the human visual system instead.

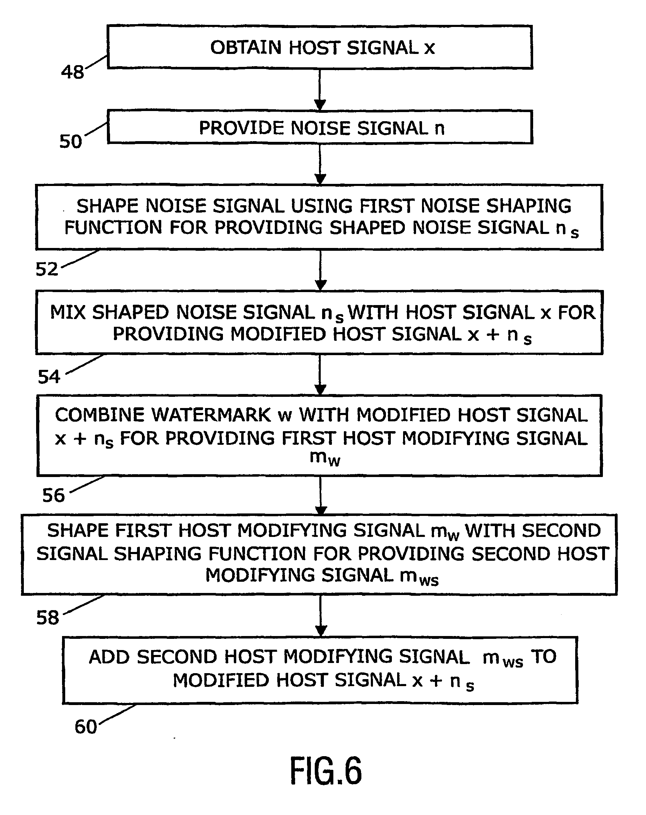

It is possible to further vary the device according to the invention by also including a second signal shaping unit using a signal shaping function M2, which is also based on information from the filter control unit 38. A device according to this third embodiment is shown in a block schematic in fig. 5. The functioning of the device in fig. 5 will now be described also in relation to fig. 6, which shows a flowchart of a method according to this third embodiment. The noise adding is in this embodiment the same as the noise adding in fig. 4. The only difference here is that the device 10 includes a second noise shaping unit 44. First a host signal x is obtained, step 48, for instance by fetching it from a memory where it is stored. The noise signal n is provided, step 50, for instance from a noise generating unit. Thereafter the noise signal n is shaped using the first noise shaping function M1 in the filter 40 for obtaining the shaped noise signal nₛ, step 52. The shaped noise signal nₛ is then added to or mixed with the host signal x by the first adding unit 12 in order to provide the modified host signal x + nₛ, step 54. The combiner unit 14, which can for example be only a filter or one of the units shown in fig. 2 or 3, receives the modified host signal x + nₛ and combines the watermark with this signal for providing a watermarked host modified signal m_{w}, which is also referred to as a first host modifying signal, step 56. The first host modifying signal m_{w} is then supplied to a second signal shaping unit 44, which uses a second signal shaping function M2 determined by the filter control unit 38 to provide a shaped host modifying signal m_{ws} or second host modifying signal, step 58. The second signal shaping unit 44 is also provided in the form of a filter, the coefficients of which are set according to the above described model P. The function M2 makes sure that there are no extra perceptible artefacts in the watermarked signal. The second host modifying signal m_{ws} is then provided to the second adding unit 36, which also receives the modified host signal x + nₛ and adds these two together for providing the watermarked host signal or the watermarked output media signal y, step 60. In this way the watermark is perceptibly masked by the media signal x. It should be realised that since the noise signal nₛ is imperceptibly added to the media signal, it provides an imperceptible watermark channel.

It is possible to vary the function used. As an alternative a so-called threshold-in-quite (TQ) function can be used when the media signal is an audio signal instead of the functions M1 and/or M2 above. In this case the noise is pre-filtered such that it falls below the hearing threshold. Similar functions can be used for image signals and/or video.

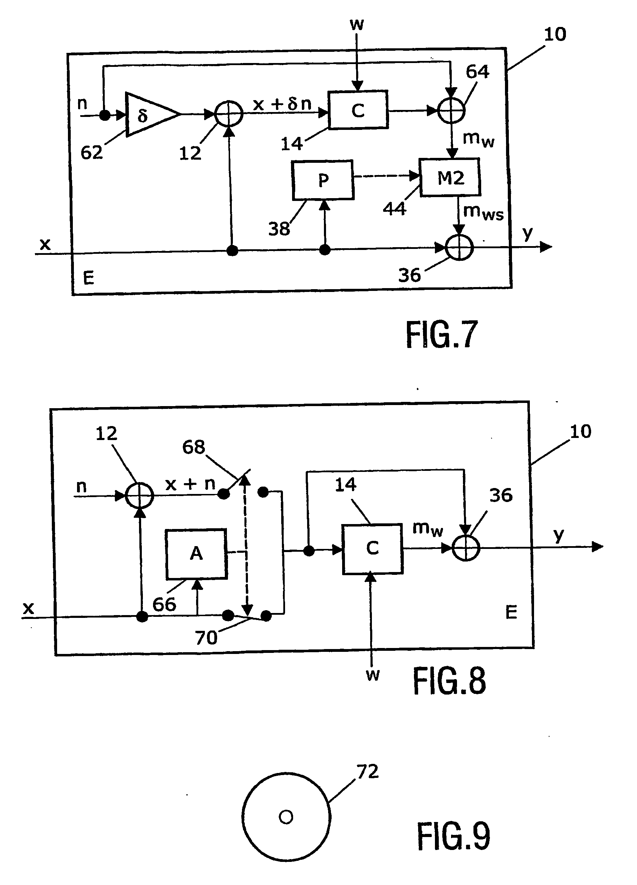

The device and method according to the third embodiment of the invention shown in fig. 5 and 6 has a slight disadvantage, which is that the noise signal is added twice to the host signal. This makes the control of the watermarking process slightly unpredictable. A device for the solution of this problem is shown in a block schematic in fig. 7, in a fourth embodiment of the invention. There is no first signal shaping unit in this device. Here the noise signal n is first provided to a scaling unit 62, which scales the noise signal with a scaling function δ. δ is here smaller than one and preferably between 0.1 and 0.2. The downscaled noise signal δn is then supplied to the first adding unit 12 where it is added to the host signal x in order to provide the modified host signal, which is now denoted x + δn because the noise signal has been downscaled. The modified host signal is then passed to the combiner unit 14, which embeds the watermark w in the previously described fashion. The output of the combiner unit 14 is connected to a third adding unit 64, which also receives the unscaled noise signal n for adding to the watermarked modified host signal in order to provide a first host modifying signal m_{w}. The signal m_{w} is provided to the second signal shaping unit 44, which filters the first host modifying signal m_{w} according to the previously described function M2, which is based on the function P of the human hearing system analysis made in filter control unit 38. The shaped signal m_{ws} or second host modifying signal from the filter 44 is provided to the second adding unit 36 for addition to the original host signal x. The filter 44 thus makes sure that the host modifying signal m_{w} is perceptibly masked by the host signal x. In this way all additional signal components are only injected into the host signal x in one point, which makes the control mechanism more predictable.

As mentioned above the noise signal is added for enabling safer detection of the watermark when the host or media signal has few frequency components, which can be sound frequency components when the signal is an audio signal or spatial frequency components when the signal is an image signal. An audio signal is however not often only made up of spectrally sparse sounds, but can often have few frequency components in just some passages or sections of a piece of music. There can therefore be no need for using the above-described embodiments of the invention in a whole media signal, but only in some pieces or sections of it. There is thus a need for being able to embed a watermark according to the above-described embodiments of the invention as well as to be able to embed a watermark according to known principles depending on the properties of the media signal.

Fig. 8 shows a device for providing this functionality. The device includes a first adding unit 12, a watermark combiner unit 14 and a second adding unit 36 according to the first embodiment. It should also be realised that the devices according to the second, third and fourth embodiments can easily be adapted to be used in the device in fig. 8 with some slight and straightforward modifications. In fig. 8 the first adding unit 12 receives a noise signal n and a host signal x and adds these together for forming a modified host signal x + n according to the above described principles. The output of the first adding unit 12 is connected to the watermark combiner unit 14 via a first switch 68. The host signal is also directly connected to the watermark combiner unit 14 via a second switch 70. An analysing unit 66 uses an analysing function A for analysing the frequency content of the host signal and controls the first and the second switch in dependence of the analysis, such that the first switch 68 connects the first adding unit 12 to the watermark combiner unit 14 if the number of frequency components in the host signal x are sparse and otherwise the second switch 70 connects the unmodified host signal x to the watermark combiner unit 14. The watermark combiner unit 14 then embeds the watermark in the signal it receives in the previously described fashion, and the second adding unit 36 adds the first host modifying signal m_{w} to the unmodified host signal x or modified host signal x + n for provision of the output signal y. Here the switching is preferably a soft switching function so that the transition from inputting of one signal to the watermark combiner unit 14 to the other is made gracefully. This means that when switching is performed from one state to another, the switch that is switched on is gradually made to let the signal pass through such that at first it is very small or attenuated and gradually rises until the full signal is being passed through the switch. The switch, which is switching off, is in the same way gradually attenuating the signal it is to switch off until it is completely switched off. This is also preferably done so that the total energy passed through to the watermark combiner unit is substantially unitary both before, during and after switching.

It should be realised that the switching does not have to be soft or graceful, although this is preferred. In case no soft switching is performed, it might be sufficient to only provide one switch, which either connects the modified host signal, or the unmodified host signal to the watermark combiner unit 14. When a single switch is used it is furthermore possible to provide it in any position which achieves the proper switching of the signals, like for instance before the first adding unit 12.

The output signal y can be provided on a storage medium, of which one 72 in the form of a CD disc is shown in fig. 9. The output signal y can also be provided on other types of storage mediums, such as memory in a computer.

There has thus been described a device and a method for multiplicatively embedding additional data in a media signal when the media signal has few frequency components. With the invention it is possible to embed a watermark in such a media signal which is easier to detect than an ordinary media signal having these properties. The second embodiment makes sure that the added noise is not perceptible and the third embodiment makes sure that both the added noise and the embedded watermark are not perceptible. The fourth embodiment has the advantage of providing a more predictable control mechanism for the embedding of a watermark. A higher level of detectability has furthermore the following advantages. The additional data remains detectable even if the quality of the media signal is degraded. It is then easier to perform for instance copy control or forensic tracking of a processed media signal.

The invention can be varied in many ways. It is for instance possible that the noise signal can be made to include data. This can be made in the way that one random sequence can be made to represent a "zero" and another can be made to represent a "one". In this way additive and multiplicative watermarks can be integrated into a single system. As mentioned before the watermark can be embedded in both the time as well as the frequency domain and the media signal can be any type of media signal. A media signal can furthermore be an audio, video or image signal. In the case of audio it can be uncompressed audio such as PCM. The invention is however also possible to apply on compressed media, which in the case of audio can be a MP3 bitstream. However, then the noise has to be appropriately converted to the bitstream. Therefore the present invention is only to be limited by the following claims.

## Claims

1. Method of generating a host modifying signal for embedding additional data (w) in a media signal (x) comprising the steps of:
obtaining a media signal (x), (step 48) and a noise signal (n; nₛ; δn),
determining filter coefficients based on analyzing the media signal (x), the determined filter coefficients subsequently being used by a filter which receives said noise signal (n; nₛ; δn) and shapes it using a first signal shaping function (M1) based on a model of human perception , (step 52), such that the shaped noise signal becomes perceptibly masked by the media signal (x),
generating a modified media signal (x + n; x + nₛ; x + δn), (step 54) by adding at least one section of said media signal (x) with the shaped noise signal (n; nₛ; δn) such that the modified media signal (x + n; x + nₛ; x + δn) contains more frequency factors than said media signal (x) , and
combining said additional data (w) with said modified media signal by multiplying said modified media signal with said additional data (w), (step 56) for providing a first host modifying media signal (m_{w}).

2. Method according to claim 1, wherein the step of multiplying is performed in the time domain.

3. Method according to claim 1, wherein the step of multiplying is performed in the frequency domain.

4. Method according to claim 1, further including the step of shaping said first host modifying media signal (m_{w}) with a second signal shaping function (M2) based on a model of human perception, (step 58), for providing a second host modifying media signal (m_{ws}).

5. Method according to claim 1, further including the step of adding a host modifying media signal (m_{w}; m_{ws}) to said modified media signal (step 60).

6. Method according to claim 1, further including the step of adding a host modifying media signal (m_{w}; m_{ws}) to said media signal.

7. Method according to claim 1, further comprising the step of scaling said noise signal using a scaling factor δ prior to the step of mixing for providing a scaled noise signal to be used for providing the modified media signal (x + δn).

8. Method according to claim 7, further including the step of adding an unscaled noise signal to said first host modifying media signal.

9. Method according to claim 1, wherein said additional data is a watermark (w).

10. Method according to claim 1, further comprising the step of analyzing (A) the media signal and providing, for different sections of the media signal, a section of said modified media signal (x + n) or a section of said media signal (x) in dependence of the analysis for combining with said additional data.

11. Method according to claim 10, further comprising the step of switching between said media signal and a modified media signal for combining with said additional data, wherein the step of switching preferably is a graceful switching.

12. Device (10) for embedding additional data (w) in a media signal (x) comprising:
a filter control unit (38) adapted to receive the media signal,
a first signal shaping unit (40) adapted to receive a noise signal, the filter control unit (38) further being adapted to analyze the media signal (x), the result of the analyzing resulting in selecting filter coefficients for said first signal shaping unit (40) which then shapes the received noise signal using a first signal shaping function (M1) based on a model (P) of human perception, such that the shaped noise signal becomes perceptibly masked by the media signal (x), and
a first adding unit (12) for generating a modified media signal (x + n; x + nₛ; x + δn), (step 54) by adding at least one section of said media signal (x) with the shaped noise signal (n; nₛ; δn) such that the modified media signal (x + n; x + nₛ; x + δn) contains more frequency factors than said media signal (x)), and
a combiner unit (14) arranged to combine said additional data with said modified media signal through multiplying said modified media signal with said additional data for providing a first host modifying media signal (m_{w}).

13. Device according to claim 12, further comprising a second signal shaping unit (44) arranged to shape said first host modifying media signal with a second signal shaping function (M2) based on a model (P) of human perception, for providing a second host modifying media signal.

14. Device according to claim 12, further comprising a second adding unit (36) arranged to add a host modifying media signal to said modified media signal.

15. Device according to claim 12, further comprising a second adding unit (36) arranged to add a host modifying media signal to said media signal (x).

16. Device according to claim 12, further comprising a scaling unit (62) arranged to scale down said noise signal (δn) prior to mixing with said media signal (x) for providing a scaled noise signal to be used for providing the modified media signal.

17. Device according to claim 16, further comprising a third adding unit (64) arranged to add an unscaled noise signal to said first host modifying media signal.

18. Device according to claim 12, further comprising an analyzing unit (66) arranged to analyze said media signal (x) and control, for different sections of the media signal, the provision of a section of a modified media signal or a section of said media signal to the combiner unit (14) for combining with said additional data in dependence of the analysis (A).

19. Device according to claim 18, further comprising at least one first switch (68) arranged to connect said media signal or said modified media signal to the combiner unit under the control of the analyzing unit.

20. Device according to claim 19, wherein there is a second switch (70) controlled by the analyzing unit, wherein the first switch connects said modified media signal to the combiner unit, the second switch connects said media signal to the combiner unit and the switches are arranged to switch gracefully from one state to the other.

## Patentansprüche

1. Verfahren des Erzeugens eines Host-Veränderungssignals zum Einbetten von zusätzlichen Daten (w) in ein Mediensignal (x), das folgende Schritte umfasst:
- Erhalten eines Mediensignals (x), (Schritt 48) und eines Rauschsignals (n, nₛ, δn),
- Bestimmen von Filterkoeffizienten basierend auf der Analyse des Mediensignals (x), wobei die bestimmten Filterkoeffizienten anschließend von einem Filter eingesetzt werden, der das genannte Rauschsignal (n, nₛ, δn) empfängt und mit Hilfe einer ersten Signalformungsfunktion (M1) basierend auf einem Modell der menschlichen Wahrnehmung formt (Schritt 52), so dass das geformte Rauschsignal wahrnehmbar durch das Mediensignal (x) maskiert wird,
- Erzeugen eines veränderten Mediensignals (x+n, x+nₛ, x+ δn), (Schritt 54) durch Addieren mindestens eines Abschnitts des genannten Mediensignals (x) zu dem geformten Rauschsignal (n, nₛ, δn), so dass das veränderte Mediensignal (x+n, x+nₛ, x+ δn) mehr Frequenzfaktoren enthält als das genannte Mediensignal (x), und
- Kombinieren der genannten zusätzlichen Daten (w) mit dem genannten veränderten Mediensignal durch Multiplizieren des genannten veränderten Mediensignals mit den genannten zusätzlichen Daten (w), (Schritt 56), um ein erstes Host-Veränderungssignals (m_{w}) zu schaffen.

2. Verfahren nach Anspruch 1, wobei der Schritt des Multiplizierens im Zeitbereich durchgeführt wird.

3. Verfahren nach Anspruch 1, wobei der Schritt des Multiplizierens im Frequenzbereich durchgeführt wird.

4. Verfahren nach Anspruch 1, das ferner den Schritt des Formens des genannten ersten Host-Veränderungsmediensignals (m_{w}) mit einer zweiten Signalformungsfunktion (M2) umfasst, die auf einem Modell der menschlichen Wahrnehmung basiert (Schritt 58), um ein zweites Host-Veränderungsmediensignal (m_{ws}) zu schaffen.

5. Verfahren nach Anspruch 1, das ferner den Schritt des Addierens eines Host-Veränderungsmediensignals (m_{w}, m_{ws}) zu dem genannten veränderten Mediensignal umfasst (Schritt 60).

6. Verfahren nach Anspruch 1, das ferner den Schritt des Addierens eines Host-Veränderungsmediensignals (m_{w}, m_{ws}) zu dem genannten Mediensignal umfasst.

7. Verfahren nach Anspruch 1, das ferner den Schritt des Skalierens des genannten Rauschsignals mit Hilfe eines Skalierfaktors δ vor dem Schritt des Mischens umfasst, um ein skaliertes Rauschsignal zu schaffen, das zum Schaffen des veränderten Mediensignals (x+ δn) eingesetzt wird.

8. Verfahren nach Anspruch 7, das ferner den Schritt des Addierens eines unskalierten Rauschsignals zu dem genannten ersten Host-Veränderungsmediensignal umfasst.

9. Verfahren nach Anspruch 1, wobei es sich bei den genannten zusätzlichen Daten um ein Wasserzeichen (w) handelt.

10. Verfahren nach Anspruch 1, das ferner den Schritt des Analysierens (A) des Mediensignals und für verschiedene Abschnitte des Mediensignals des Schaffens eines Abschnitts des genannten veränderten Mediensignals (x+n) oder eines Abschnitts des genannten Mediensignals (x) in Abhängigkeit von der Analyse zum Kombinieren mit den genannten zusätzlichen Daten umfasst.

11. Verfahren nach Anspruch 10, das ferner den Schritt des Umschaltens zwischen dem genannten Mediensignal und einem veränderten Mediensignal zum Kombinieren mit den genannten zusätzlichen Daten umfasst, wobei der Schritt des Umschaltens vorzugsweise eine sanfte Umschaltung beinhaltet.

12. Einrichtung (10) zum Einbetten von zusätzlichen Daten (w) in ein Mediensignal (x), die Folgendes umfasst:
- eine Filtersteuereinheit (38), die so angepasst ist, dass sie das Mediensignal empfängt,
- einen ersten Signalformer (40), der so angepasst ist, dass er ein Rauschsignal empfängt, wobei die Filtersteuereinheit (38) ferner so angepasst ist, dass sie das Mediensignal (x) analysiert, wobei das Ergebnis der Analyse zu der Auswahl von Filterkoeffizienten für den genannten ersten Signalformer (40) führt, der dann das empfangene Rauschsignal mit Hilfe einer ersten Signalformungsfunktion (M1) basierend auf einem Modell (P) der menschlichen Wahrnehmung formt, so dass das geformte Rauschsignal wahrnehmbar durch das Mediensignal (x) maskiert wird, und
- einen ersten Addierer (12) zum Erzeugen eines veränderten Mediensignals (x+n, x+nₛ, x+ δn), (Schritt 54) durch Addieren mindestens eines Abschnitts des genannten Mediensignals (x) zu dem geformten Rauschsignal (n, nₛ, δn), so dass das veränderte Mediensignal (x+n, x+nₛ, x+ δn) mehr Frequenzfaktoren als das genannte Mediensignal (x) enthält, und
- einen Kombinierer (14), der so ausgelegt ist, dass er die genannten zusätzlichen Daten mit dem genannten veränderten Mediensignal durch Multiplizieren des genannten veränderten Mediensignals mit den genannten zusätzlichen Daten kombiniert, um ein erstes Host-Veränderungsmediensignal (m_{w}) zu schaffen.

13. Einrichtung nach Anspruch 12, die ferner einen zweiten Signalformer (44) umfasst, der so ausgelegt ist, dass er das genannte erste Host-Veränderungsmediensignal mit einer zweiten Signalformungsfunktion (M2) formt, die auf einem Modell (P) der menschlichen Wahrnehmung basiert, um ein zweites Host-Veränderungsmediensignal zu schaffen.

14. Einrichtung nach Anspruch 12, die ferner einen zweiten Addierer (36) umfasst, der so ausgelegt ist, dass er ein Host-Veränderungsmediensignal zu dem genannten veränderten Mediensignal addiert.

15. Einrichtung nach Anspruch 12, die ferner einen zweiten Addierer (36) umfasst, der so ausgelegt ist, dass er ein Host-Veränderungsmediensignal zu dem genannten Mediensignal (x) addiert.

16. Einrichtung nach Anspruch 12, die ferner einen Skalierer (62) umfasst, der so ausgelegt ist, dass er das genannte Rauschsignal (δn) vor dem Mischen mit dem genannten Mediensignal (x) nach unten skaliert, um ein skaliertes Rauschsignal zu schaffen, das zum Schaffen des veränderten Mediensignals eingesetzt wird.

17. Einrichtung nach Anspruch 16, die ferner einen dritten Addierer (64) umfasst, der so ausgelegt ist, dass er ein unskaliertes Rauschsignal zu dem genannten ersten Host-Veränderungsmediensignal addiert.

18. Einrichtung nach Anspruch 12, die ferner eine Analyseeinheit (66) umfasst, die so ausgelegt ist, dass sie das genannte Mediensignal (x) analysiert und für verschiedene Abschnitte des Mediensignals die Zuführung eines Abschnitts eines veränderten Mediensignals oder eines Abschnitts des genannten Mediensignals zum Kombinierer (14) steuert, um ihn in Abhängigkeit von der Analyse (A) mit den genannten zusätzlichen Daten zu kombinieren.

19. Einrichtung nach Anspruch 18, die ferner mindestens einen ersten Schalter (68) umfasst, der so ausgelegt ist, dass er das genannte Mediensignal oder das genannte veränderte Mediensignal gesteuert von der Analyseeinheit dem Kombinierer zuführt.

20. Einrichtung nach Anspruch 19, die einen von der Analyseeinheit gesteuerten zweiten Schalter (70) umfasst, wobei der erste Schalter das genannte veränderte Mediensignal dem Kombinierer zuführt, wobei der zweite Schalter das genannte Mediensignal dem Kombinierer zuführt und die Schalter so ausgelegt sind, dass sie sanft von einem Zustand in den anderen umschalten. u verändertem Hostsignal x+nₛ addieren

## Revendications

1. Procédé de génération d'un signal modificateur de l'hôte pour intégrer des données supplémentaires (w) dans un signal multimédia (x) comprenant les étapes suivantes :
l'obtention d'un signal multimédia (x), (étape 48), et d'un signal de bruit (n; nₛ; δn),
la détermination de coefficients de filtrage sur la base de l'analyse du signal multimédia (x), les coefficients de filtrage déterminés étant ensuite utilisés par un filtre qui reçoit ledit signal de bruit (n; nₛ; δn) et le met en forme en utilisant une première fonction de mise en forme du signal (M1) sur la base d'un modèle de perception humaine, (étape 52), de sorte que le signal de bruit mis en forme devient masqué sur le plan perceptuel par le signal multimédia (x),
la génération d'un signal multimédia modifié (x + n; x + nₛ; x + δn), (étape 54) en ajoutant une section au moins dudit signal multimédia (x) au signal de bruit mis en forme (n; nₛ; δn) de sorte que le signal multimédia modifié (x + n; x + nₛ; x + δn) contient davantage de facteurs de fréquence que ledit signal multimédia (x), et
la combinaison desdites données supplémentaires (w) audit signal multimédia modifié en multipliant ledit signal multimédia modifié avec lesdites données supplémentaires (w), (étape 56), pour fournir un premier signal multimédia modificateur de l'hôte (m_{w}).

2. Procédé suivant la revendication 1, dans lequel l'étape de multiplication est exécutée dans le domaine temporel.

3. Procédé suivant la revendication 1, dans lequel l'étape de multiplication est exécutée dans le domaine fréquenciel.

4. Procédé suivant la revendication 1, comprenant en outre l'étape de mise en forme dudit premier signal multimédia modificateur de l'hôte (m_{w}) avec une deuxième fonction de mise en forme du signal (M2) sur la base d'un modèle de perception humaine, (étape 58), pour fournir un deuxième signal multimédia modificateur de l'hôte (m_{ws}).

5. Procédé suivant la revendication 1, incluant en outre l'étape d'addition d'un signal multimédia modificateur de l'hôte (m_{w}; m_{ws}) audit signal multimédia modifié (étape 60).

6. Procédé suivant la revendication 1, incluant en outre l'étape d'addition d'un signal multimédia modificateur de l'hôte (m_{w}; m_{ws}) audit signal multimédia.

7. Procédé suivant la revendication 1, comprenant en outre l'étape de mise à l'échelle dudit signal de bruit en utilisant un facteur de mise à l'échelle δ avant l'étape de mélange pour fournir un signal de bruit mis à l'échelle à utiliser pour fournir le signal multimédia modifié (x + δn).

8. Procédé suivant la revendication 7, incluant en outre l'étape d'addition d'un signal de bruit non mis à l'échelle audit premier signal multimédia modificateur de l'hôte.

9. Procédé suivant la revendication 1, dans lequel lesdites données supplémentaires sont un filigrane (w).

10. Procédé suivant la revendication 1, comprenant en outre l'étape d'analyse (A) du signal multimédia et de fourniture, pour des sections différentes du signal multimédia, d'une section dudit signal multimédia modifié (x + n) ou d'une section dudit signal multimédia (x) en fonction de l'analyse pour la combiner auxdites données supplémentaires.

11. Procédé suivant la revendication 10, comprenant en outre l'étape de commutation entre ledit signal multimédia et un signal multimédia modifié pour le combiner avec lesdites données supplémentaires, dans lequel l'étape de commutation est de préférence une commutation progressive.

12. Dispositif (10) pour intégrer des données supplémentaires (w) dans un signal multimédia (x) comprenant :
une première unité de commande (38) à même de recevoir le signal multimédia;
une première unité de mise en forme du signal (40) à même de recevoir un signal de bruit, l'unité de commande de filtrage (38) étant en outre à même d'analyser le signal multimédia (x), le résultat de l'analyse entraînant la sélection de coefficients de filtrage pour ladite première unité de mise en forme du signal (40) qui met ensuite en forme le signal de bruit reçu à l'aide d'une première fonction de mise en forme du signal (M1) sur la base d'un modèle (P) de perception humaine, de sorte que le signal de bruit mis en forme devient masqué sur le plan perceptuel par le signal multimédia (x), et
une première unité d'addition (12) pour générer un signal multimédia modifié (x + n; x + nₛ; x + δn), (étape 54), en ajoutant une section au moins dudit signal multimédia (x) au signal de bruit mis en forme (n; nₛ; δn) de sorte que le signal multimédia modifié (x + n; x + nₛ; x + δn) contient davantage de facteurs de fréquence que ledit signal multimédia (x), et
une unité de combinaison (14) à même de combiner lesdites données supplémentaires audit signal multimédia modifié en multipliant ledit signal multimédia modifié avec lesdites données supplémentaires pour fournir un premier signal multimédia modificateur de l'hôte (m_{w}).

13. Dispositif suivant la revendication 12, comprenant en outre une deuxième unité de mise en forme du signal (44) à même de mettre en forme ledit premier signal multimédia modificateur de l'hôte avec une deuxième fonction de mise en forme du signal (M2) sur la base d'un modèle (P) de perception humaine, pour fournir un deuxième signal multimédia modificateur de l'hôte.

14. Dispositif suivant la revendication 12, comprenant en outre une deuxième unité d'addition (36) à même d'ajouter un signal multimédia modificateur de l'hôte audit signal multimédia modifié.

15. Dispositif suivant la revendication 12, comprenant en outre une deuxième unité d'addition (36) à même d'ajouter un signal multimédia modificateur de l'hôte audit signal multimédia (x).

16. Dispositif suivant la revendication 12, comprenant en outre une unité de mise à l'échelle (62) à même de mettre à l'échelle inférieure ledit signal de bruit (δn) avant le mélange avec ledit signal multimédia (x) pour fournir un signal de bruit mis à l'échelle à utiliser pour fournir le signal multimédia modifié.

17. Dispositif suivant la revendication 16, comprenant en outre une troisième unité d'addition (64) à même d'ajouter un signal de bruit non mis à l'échelle audit premier signal multimédia modificateur de l'hôte.

18. Dispositif suivant la revendication 12, comprenant en outre une unité d'analyse (66) à même d'analyser ledit signal multimédia (x) et de commander, pour des sections différentes du signal multimédia, la fourniture d'une section d'un signal multimédia modifié ou d'une section dudit signal multimédia à l'unité de combinaison (14) pour la combiner auxdites données supplémentaires en fonction de l'analyse (A).

19. Dispositif suivant la revendication 18, comprenant en outre au moins un premier commutateur (68) à même de connecter ledit signal multimédia ou ledit signal multimédia modifié à l'unité de combinaison sous le contrôle de l'unité d'analyse.

20. Dispositif suivant la revendication 19, dans lequel se trouve un deuxième commutateur (70) commandé par l'unité d'analyse, dans lequel le premier commutateur connecte ledit signal multimédia modifié à l'unité de combinaison, le deuxième commutateur connecte ledit signal multimédia à l'unité de combinaison et les commutateurs sont à même de commuter graduellement d'un état à l'autre.
